# EUROPÄISCHE PATENTANMELDUNG

(11) **EP 4 488 721 A1**
(43) Veröffentlichungstag der Anmeldung: **08.01.2025**
(21) Anmeldenummer: 23183327.8
(22) Anmeldetag: 04.07.2023
(51) Int. Cl.: G01S 17/87, G01S 17/931, B60Q 1/00, B60Q 1/04, G01S 7/481, G01S 13/931

(54) **KRAFTFAHRZEUG MIT EINEM LIDAR SYSTEM**

(71) Anmelder: Magna International Europe GmbH, 1120 Wien (AT); Magna Electronics Europe GmbH & Co. OHG, 63877 Sailauf (DE)
(72) Erfinder: PUESKUEL, Oezguer Nurettin, 25474 Ellerbek (DE); KOECHER, Jens, 06128 Halle (DE); GNECCHI, Salvatore, 81371 Muenchen (DE); SCHLEICHER, Daniel, 4300 St. Valentin (AT)
(74) Vertreter: Zangger, Bernd

(57) **Zusammenfassung**

Ein Kraftfahrzeug mit einem LIDAR System, wobei das LIDAR System zumindest ein Sendermodul (1) und zumindest ein Empfängermodul (2) umfasst, wobei alle Sender- und Empfängermodule (1, 2) als voneinander getrennte, separate Baueinheiten ausgebildet sind, wobei das Sendermodul (1) und das Empfängermodul (2) über eine Datenleitung mit einer Steuereinheit (4) des LIDAR Systems verbunden sind, wobei die Steuereinheit (4) dazu eingerichtet ist, eine Zeitsynchronisation zwischen Sendermodul (1) und Empfängermodul (2) herzustellen.

## Beschreibung

### Gebiet der Erfindung

Die vorliegende Erfindung betrifft ein Kraftfahrzeug mit einem LIDAR System.

### Stand der Technik

Es ist bekannt, LIDAR (Light Detection and Ranging) Systeme in Kraftfahrzeugen zu verwenden, um mittels ausgesendeter Laserstrahlen und der Detektion ihrer Reflektionen, Entfernungen und damit auch Geschwindigkeiten im Umfeld des Kraftfahrzeuges zu messen. Beispielsweise können hierdurch Hindernisse im Umfeld des Fahrzeuges erfasst werden. Insbesondere zur Umfelderkennung in autonomen Kraftfahrzeugen werden LIDAR Systeme verwendet.

Üblicherweise verwenden solche LIDAR Systeme integrierte Baueinheiten, die einen Sender für die Laserstrahlen und einen Empfänger für die reflektierten Strahlen umfassen, die in einem gemeinsamen Gehäuse genau zueinander positioniert sind. Solche Baueinheiten können dann in einem Fahrzeug verbaut werden.

Solche LIDAR Baueinheiten nehmen relativ große Bauräume ein, sind der Witterung ausgesetzt und brauchen oft eigene Beheizungs- und Reinigungsmechanismen. Auch sind solche LIDAR Systeme nicht gleich gut für die Umfelderfassung in verschiedene Fahrszenarien geeignet. Der Einsatz solcher LIDAR Baueinheiten erfordert auch einen hohen Energieaufwand.

### Zusammenfassung der Erfindung

Es ist eine Aufgabe der Erfindung, ein Kraftfahrzeug mit einem LIDAR System anzugeben, dass in dieser Hinsicht verbessert ist, einfacher und kleiner bauend in ein Kraftfahrzeug integrierbar ist und/oder in verschiedenen Fahrszenarien effizient arbeiten kann.

Die Lösung der Aufgabe erfolgt durch ein Kraftfahrzeug mit einem LIDAR System, wobei das LIDAR System zumindest ein Sendermodul und zumindest ein Empfängermodul umfasst, wobei alle Sender- und Empfängermodule als voneinander getrennte, separate Baueinheiten ausgebildet sind, wobei das Sendermodul und das Empfängermodul über eine Datenleitung mit einer Steuereinheit des LIDAR Systems verbunden sind, wobei die Steuereinheit dazu eingerichtet ist, eine Zeitsynchronisation zwischen Sendermodul und Empfängermodul herzustellen.

Erfindungsgemäß ist ein Kraftfahrzeug mit einem LIDAR System ausgestattet, in dem zumindest ein Sendermodul und zumindest ein Empfängermodul nicht in einer gemeinsamen Baueinheit im Kraftfahrzeug verbaut sind, sondern als separate Einheiten bzw. Module an unterschiedlichen Positionen im Kraftfahrzeug verbaut sein können.

Das Sendermodul und das Empfängermodul sind separate Bauteile, jedoch über eine, bevorzugt zentrale, Steuereinheit verbunden, die eine Zeitsynchronisierung zwischen Sender und Empfänger sicherstellt.

Ein derartiges LIDAR System ist aufgrund der einzelnen, separaten Module gut und platzsparend in ein Fahrzeug integrierbar. Vor allem können von der Steuereinheit durch die Trennung von Sender und Empfänger, flexibel geeignete Sendermodule und/oder Empfängermodule angesteuert werden, um beispielsweise abhängig von der aktuellen Fahrsituation geeignete Sendertypen einzusetzen und auf effiziente Weise gute Auswertungsergebnisse zu erzielen.

Das Sendermodul und das Empfängermodul werden zumindest zur Zeitsynchronisation von der Steuereinheit gesteuert, bevorzugt generell von der Steuereinheit gesteuert. Die Steuereinheit kann eine zentrale Steuereinheit sein, die Sendermodul und Empfängermodul ansteuert, oder eine Steuereinheit des Sendermoduls oder des Empfängermoduls sein. Die Zeitsynchronisierung erfolgt bevorzugt über eine bidirektionale Kommunikation. Die Zeitsynchronisierung kann eine Modul-zu-Modul Synchronisation sein oder eine Master-Slave Synchronisation, wobei der Master, und somit die Steuereinheit, beispielsweise am Sendermodul oder am Empfängermodul oder an einer anderen Position und beispielsweise mit zusätzlichen anderen Funktionen ausgebildet sein kann, beispielsweise an einer Hauptplatine des Scheinwerfers.

Bevorzugt umfasst das LIDAR System zumindest zwei Sendermodule, wobei die Sendermodule als voneinander getrennte, separate Baueinheiten ausgebildet sind, wobei die Sendermodule über Datenleitungen mit der, bevorzugt zentralen, Steuereinheit des LIDAR Systems verbunden sind, wobei die Steuereinheit dazu eingerichtet ist, wahlweise ein bestimmtes der Sendermodule einzusetzen. Die Steuereinheit ist somit dazu eingerichtet, zumindest zwei Sendermodule und zumindest ein Empfängermodul anzusteuern.

Besonders bevorzugt ist die Steuereinheit dazu eingerichtet, das wahlweise bestimmte Sendermodul und das Empfängermodul anzusteuern und eine Zeitsynchronisation zwischen dem wahlweise bestimmten Sendermodul und dem Empfängermodul herzustellen, so dass das selbe Empfängermodul zum Empfang der Signale der zumindest zwei Sendermodule eingesetzt werden kann.

Vorzugsweise senden die zumindest zwei Sendermodule unterschiedliche Arten von Signalen aus, insbesondere elektromagnetische Wellen unterschiedlicher Wellenlängen, beispielsweise sichtbares und unsichtbares, insbesondere infrarotes, Licht. Die Steuerung kann somit dazu eingerichtet sein, beispielsweise abhängig von aktuellen Bedingungen, eine gewünschte Art von Sendermodul zu verwenden und deren reflektierte Signale, beispielsweise durch ein selbes oder durch zwei verschiedene Empfängermodule, auszuwerten.

Bevorzugt sendet zumindest ein Sendermodul, insbesondere ein Sendermodul das einen üblichen Scheinwerfer als Lichtquelle verwendet, Licht einer sichtbaren Wellenlänge aus und sendet zumindest ein Sendermodul, insbesondere ein Sendermodul das einen Laser als Lichtquelle verwendet, ein Infrarot-Signal aus.

Vorzugsweise umfassen die zumindest zwei Sendermodule zumindest zwei, bevorzugt alle drei, aus der Gruppe: Fernlicht-Sendermodul, insbesondere High-Beam-LED-Sendermodul, Abblendlicht-Sendermodul, insbesondere Low-Beam-LED-Sendermodul, Lasersignal-Sendermodul, beispielsweise VCSEL-Array (vertical-cavity surface-emitting laser).

Bevorzugt senden zumindest zwei Sendermodule Lasersignale unterschiedlicher Wellenlänge aus.

Bevorzugt sendet zumindest ein Sendermodul ein gepulstes Fernlicht aus, das bevorzugt hierdurch nicht sichtbar ist und/oder nicht blendet.

Bevorzugt umfasst das LIDAR System zumindest zwei Empfängermodule, wobei alle Empfängermodule als voneinander getrennte, separate Baueinheiten ausgebildet sind, wobei die Empfängermodule über Datenleitungen mit der Steuereinheit des LIDAR Systems verbunden sind, wobei die Steuereinheit dazu eingerichtet ist, wahlweise ein bestimmtes der Empfängermodule einzusetzen oder auszuwerten.

Die zumindest zwei Empfängermodule können zumindest ein Fernfeld-Empfängermodul und zumindest ein Nahfeld-Empfängermodul umfassen, wobei die Steuereinheit dazu eingerichtet ist, wahlweise das Fernfeld-Empfängermodul, bzw. die Fernfeld-Empfängermodule, oder das Nahfeld - Empfängermodul, bzw. die Nahfeld-Empfängermodule, einzusetzen oder auszuwerten. Die Steuerung kann somit dazu eingerichtet sein, abhängig von aktuellen Bedingungen, eine gewünschte Art von Empfängermodul zu verwenden.

Vorzugsweise ist das Kraftfahrzeug, insbesondere die Steuereinheit, dazu eingerichtet, ein aktuelles Fahrszenario zu detektieren, insbesondere Stadtfahrt und/oder Autobahnfahrt und/oder Parkbereich und/oder Staubetrieb. Die Steuereinheit ist bevorzugt dazu eingerichtet, abhängig von dem detektierten aktuellen Fahrszenario ein bestimmtes Sendermodul oder eine bestimmte Art von Sendermodul einzusetzen, insbesondere ein Fernlicht-Sendermodul oder ein Abblendlicht-Sendermodul oder ein Laser-Sendermodul.

Die Steuereinheit ist bevorzugt dazu eingerichtet, abhängig von dem detektierten aktuellen Fahrszenario ein bestimmtes Empfängermodul oder eine bestimmte Art von Empfängermodul einzusetzen oder auszuwerten, insbesondere ein Fernfeld-Empfängermodul oder ein Nahfeld-Empfängermodul. Verschiedene mögliche Fahrszenarien und die dort bevorzugt verwendeten Arten von Sendermodulen und Empfängermodulen werden später, im Zusammenhang mit den Figuren, genauer beschrieben.

Bevorzugt verwendet zumindest ein Empfängermodul eine optische Linse, die zumindest zwei verschiedene optische Zonen mit unterschiedlicher Brennweite aufweist, wobei abhängig von einem detektierten aktuellen Fahrszenario das Empfängermodul eine bestimmte optische Zone der optischen Linse verwendet. Die optische Linse mit verschiedenen optischen Zonen kann ähnlich der Linsen einer Gleitsichtbrille ausgebildet sein. Beispielsweise kann die Linse im oberen Bereich für eine Fernsicht, im unteren Bereich für eine Nahsicht ausgebildet sein. Dazwischen kann beispielsweise ein Bereich für mittlere Distanzen ausgebildet sein.

Zumindest ein Sendermodul und/oder zumindest ein Empfängermodul kann in einem Scheinwerfer des Kraftfahrzeugs angeordnet sein und kann somit ein Scheinwerfergehäuse und/oder eine Scheinwerferabdeckung als Schutz verwenden.

Vorzugsweise sind einige oder alle Sendermodule und/oder einige oder alle Empfängermodule in zumindest einem Scheinwerfer, bevorzugt in mehreren Scheinwerfern, des Kraftfahrzeuges angeordnet. Die Sendermodule und/oder Empfängermodule können auch hinter einer Windschutzscheibe und/oder an einer Stoßstange angeordnet sein.

### Kurzbeschreibung der Zeichnungen

Die Erfindung wird im Folgenden beispielhaft unter Bezugnahme auf die Zeichnungen beschrieben.
- Fig. 1: ist eine schematische Ansicht von oben auf ein erfindungsgemäßes Kraftfahrzeug mit einem LIDAR System.
- Fig. 2a, 2b: ist eine schematische seitliche Ansicht eines vorderen Scheinwerfers (Fig. 2a) und eines hinteren Scheinwerfers (Fig. 2b) eines erfindungsgemäßen Kraftfahrzeugs mit einem LIDAR System.
- Fig. 3: ist eine schematische Darstellung von Funktionseinheiten eines LIDAR Systems eines erfindungsgemäßen Kraftfahrzeugs.
- Fig. 4: ist eine schematische Darstellung einer Linse eines Empfängermoduls eines erfindungsgemäßen Kraftfahrzeugs.

### Detaillierte Beschreibung der Erfindung

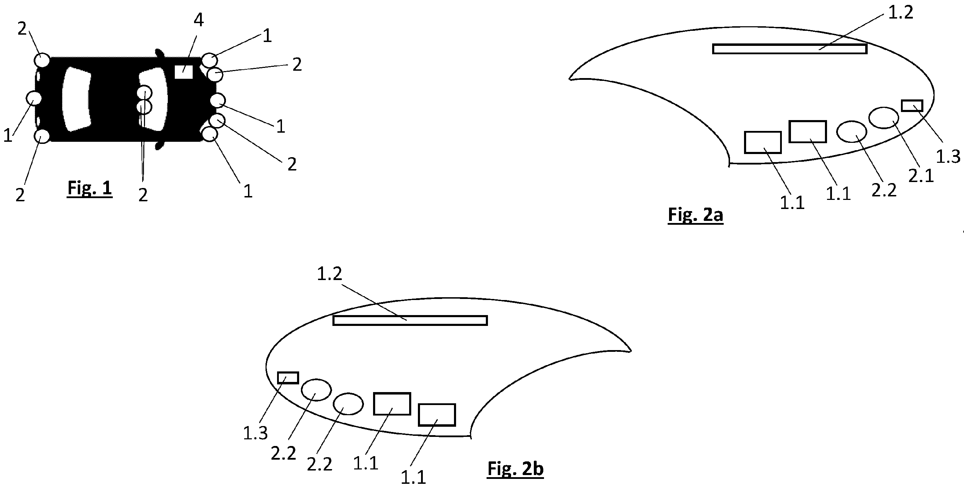

In Fig. 1 ist ein erfindungsgemäßes Kraftfahrzeug mit einem LIDAR System von oben dargestellt.

Erfindungsgemäß werden Lidar-Schlüsselkomponenten, insbesondere Sender und Empfänger, als einzelne Module aus einem LIDAR System herausgelöst, und als separate Einheiten verbaut. Sendermodule 1, Empfängermodule 2 und Steuereinheit 4 können an verschiedenen Positionen eines Fahrzeuges verbaut sein.

Beispielsweise zeigt Fig. 1 eine Ausführung mit vier Sendermodulen 1 und 6 Empfängermodulen 2. Dabei sind zwei Sendermodule 1 und zwei Empfangsmodule 2 in die beiden Frontscheinwerfer eingebaut. Zwei weitere Empfangsmodule 2 sind in die beiden Heckscheinwerfer eingebaut. Die weiteren beiden Sendermodule 1 sind nahe der Längsmittelachse des Fahrzeugs, nämlich an den beiden Fahrzeugenden, vorne und hinten, angeordnet, beispielsweise in Stoßstangen. Die übrigen zwei Empfängermodule 2 sind ebenfalls nahe der Längsmittelachse des Fahrzeugs, beispielsweise am oberen Rand einer Windschutzscheibe des Fahrzeugs verbaut.

Die Empfänger können separat, getrennt von den Sendern, an Scheinwerfern, Stoßstangen und Windschutzscheiben angebracht werden, mit weniger Übertragungsverlusten und ohne interne Reflexionsprobleme.

Es können verschiedene Arten von Sendern, zum Beispiel Laser mit verschiedenen Wellenlängen und/oder alternativ sichtbares Licht, mit einem Empfänger verwendet werden und/oder verschiedene Arten von Empfängern beispielsweise für verschiedene Sender verwendet werden.

Beispielsweise können folgende Arten von Sendermodulen 1 und Empfängermodulen 2 verwendet werden:
Ein oder mehrere Sendermodule, beispielsweise umfassend verschiedene Lasertypen, wie:
- Diodenlaser - wie zum Beispiel EEL, VCSEL, QCL, ECDL-Laser und/oder
- Faserlaser - wie zum Beispiel Erbium, EDFA, Supercontinuum-Laser und/oder
- DPSSL (diode-pumped solid-state laser) - wie zum Beispiel Nd:YAG Laser
und/oder umfassend verschiedene Wellenlängen, wie zum Beispiel NIR, SWIR, LWIR oder Hybrid-(NIR und SWIR)-Bereich.

Ein oder mehrere Empfängermodule, beispielsweise umfassend verschiedene Empfängertypen, wie:
- Multiphoton Detektor - wie zum Beispiel PIN Photodiode, APD (Avalanche photodiode)
- Single Photon Detektor - wie zum Beispiel SPAD (Single-photon avalanche photodiode)
und/oder verschiedene Empfänger-Dimensionen, wie zum Beispiel Single Pixel, Linear Array, 2D Matrix, beispielsweise SiPM (Silicon photomultiplier), MPPC (Multi-pixel photon counter), Antenna Array.

Ein von der Steuereinheit ausgewähltes Sendermodul 1 beleuchtet die Szenerie mit der entsprechenden Lichtmenge, um das gewünschte FoV (field of view, Sichtfeld) zu erreichen.

Das FoV (field of view, Sichtfeld) des Empfängers 2 kann ebenfalls situationsabhängig gewählt werden (Nah- oder Fernoptik), um gewünschte Anforderungen zu erfüllen.

Sender und Empfänger können über ein bidirektionales Feedback dynamisch synchronisiert und kalibriert werden, um eine automatische Zeitsynchronisation und einen Parallaxenausgleich zu ermöglichen.

In dem Beispiel in Fig. 2a und 2b werden alle LIDAR-Elemente separat in die Scheinwerfer 3 integriert. Sowohl der Front-Scheinwerfer (Fig. 2a) als auch der Heck-Scheinwerfer (Fig. 2b) können aufweisen:
- Fernlicht-Sender 1.1
- Abblendlicht-Sender 1.2
- Laser-Sender 1.3, zum Beispiel Diffusor mit VCSEL Array
- Fernfeld-Empfänger 2.1
- Nahfeld-Empfänger 2.2

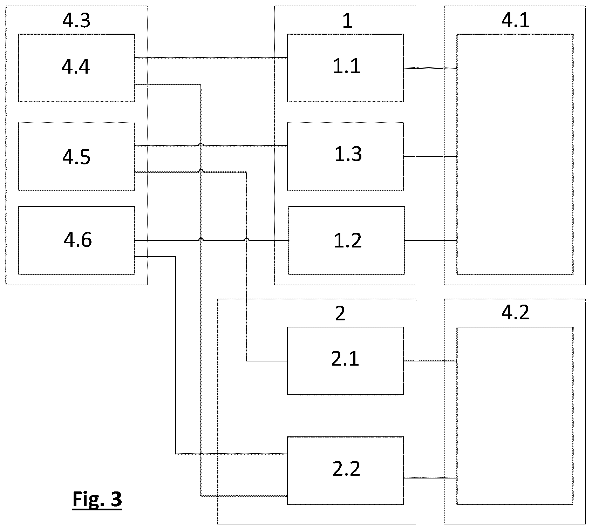

Wie in Fig. 3 schematisch dargestellt, kann eine Steuereinheit 4 ein Sendersteuerungsmodul 4.1, zur Ansteuerung der Sendermodule 1, und ein Empfängersteuerungsmodul 4.2, zur Ansteuerung der Empfängermodule 2 aufweisen. Das Sendersteuerungsmodul 4.1 kann ein geeignetes Sendermodul 1 auswählen. Das Empfängersteuerungsmodul 4.2 wählt die passende Sensortechnologie, also die geeignete Art von Empfängermodul 2, für die Erkennung aus. Die Auswahl der Sender und Empfänger erfolgt je nach aktuellem Szenario 4.3. Zum Beispiel:
Im Szenario Stadt 4.4: Fernlicht-Sender 1.1, Nahfeld-Empfänger 2.2, zum Beispiel SPAD / SiPM Array.
Im Szenario Autobahn 4.5: Laser-Sender 1.3, Fernfeld-Empfänger 2.1.
Im Szenario Parksituation 4.6: Abblendlicht-Sender 1.2, Nahfeld-Empfänger 2.2.

Es können weitere Szenarien 4.4 vorgesehen sein, wie zum Beispiel Verkehrsstau.

Bei Interferenzen kann eine Technologie zur Reduktion der Interferenzen eingesetzt werden.

Objekterkennungs-Algorithmen können beispielsweise kombiniert, für mehrere oder alle Szenarien, oder nach Situation/Szenarien getrennt verwendet werden.

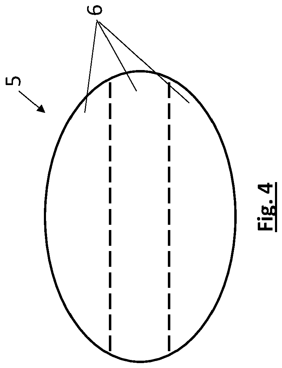

Basierend auf den Straßentypen, also Szenarien, kann für ein Empfängermodul 2 auch ein Objektiv/eine Linse 5 mit verschiedenen Sichtzonen 6 verwendet werden, ähnlich der Linse einer Gleitsichtbrille, wie in Fig. 4 dargestellt.

Eine Linse 5 kann beispielsweise verwenden:
- Eine Zone 6 für Fernsicht, in Fig. 4 oben, beispielsweise bei einer Neigung von über 0°.
- Eine Zone 6 Intermediärbereich, in Fig. 4 mitte, beispielsweise zwischen -2° und 0° Neigung.
- Eine Zone 6 für Nahsicht, in Fig. 4 unten, beispielsweise bei einer Neigung unter -2°.

Die Verwendung dieses Linsentyps ermöglicht es, die Straße mit geringer Auflösung zu scannen und dennoch eine hohe Auflösung für weite Entfernungen zu erzielen.

Neben dieser Linse 5 mit unterschiedlicher Brennweite könnte auch ein Scheinwerfer-Kurvenlichtaktor verwendet werden, um das Sichtfeld des Sensors einzustellen.

### Bezugszeichenliste

- 1: Sendermodul
- 1.1: Fernlicht-Sendermodul
- 1.2: Abblendlicht-Sendermodul
- 1.3: Laser-Sendermodul, beispielsweise VCSEL-Array
- 2: Empfängermodul
- 2.1: Fernfeld-Empfängermodul
- 2.2: Nahfeld-Empfängermodul
- 3: Scheinwerfer
- 4: Steuereinheit
- 4.1: Sendersteuerungsmodul
- 4.2: Empfängersteuerungsmodul
- 4.3: Szenario
- 4.4: Szenario Stadtfahrt
- 4.5: Szenario Autobahn
- 4.6: Szenario Parken
- 5: Linse
- 6: Zone

## Patentansprüche

1. Kraftfahrzeug mit einem LIDAR System, wobei das LIDAR System zumindest ein Sendermodul (1) und zumindest ein Empfängermodul (2) umfasst, wobei alle Sender- und Empfängermodule (1, 2) als voneinander getrennte, separate Baueinheiten ausgebildet sind, wobei das Sendermodul (1) und das Empfängermodul (2) über eine Datenleitung mit zumindest einer Steuereinheit (4) des LIDAR Systems verbunden sind, wobei die Steuereinheit (4) dazu eingerichtet ist, eine Zeitsynchronisation zwischen Sendermodul (1) und Empfängermodul (2) herzustellen.

2. Kraftfahrzeug nach Anspruch 1,
**dadurch gekennzeichnet, dass** das LIDAR System zumindest zwei Sendermodule (1) umfasst, wobei die Sendermodule (1) als voneinander getrennte, separate Baueinheiten ausgebildet sind, wobei die Sendermodule (1) über Datenleitungen mit der Steuereinheit (4) des LIDAR Systems verbunden sind, wobei die Steuereinheit (4) dazu eingerichtet ist, wahlweise ein bestimmtes der Sendermodule (1) einzusetzen.

3. Kraftfahrzeug nach Anspruch 2,
**dadurch gekennzeichnet, dass** die Steuereinheit (4) dazu eingerichtet ist, das wahlweise bestimmte Sendermodul (1) und das Empfängermodul (2) anzusteuern und eine Zeitsynchronisation zwischen dem wahlweise bestimmten Sendermodul (1) und dem Empfängermodul (2) herzustellen, so dass das selbe Empfängermodul (2) zum Empfang der Signale der zumindest zwei Sendermodule (1) eingesetzt werden kann.

4. Kraftfahrzeug nach Anspruch 2 oder 3,
**dadurch gekennzeichnet, dass** die zumindest zwei Sendermodule (1) unterschiedliche Arten von Signalen aussenden, insbesondere elektromagnetische Wellen unterschiedlicher Wellenlängen aussenden.

5. Kraftfahrzeug nach Anspruch 4,
**dadurch gekennzeichnet, dass** zumindest ein Sendermodul (1), insbesondere ein Sendermodul (1) das einen üblichen Scheinwerfer als Lichtquelle verwendet, Licht einer sichtbaren Wellenlänge aussendet und/oder zumindest ein Sendermodul (1), insbesondere ein Sendermodul (1) das einen Laser als Lichtquelle verwendet, ein Infrarot-Signal aussendet.

6. Kraftfahrzeug nach zumindest einem der Ansprüche 2 bis 5,
**dadurch gekennzeichnet, dass** die zumindest zwei Sendermodule (1) zumindest zwei, bevorzugt alle drei, aus der Gruppe umfassen: Fernlicht-Sendermodul (1.1), Abblendlicht-Sendermodul (1.2), Lasersignal-Sendermodul (1.3).

7. Kraftfahrzeug nach zumindest einem der Ansprüche 2 bis 6,
**dadurch gekennzeichnet, dass** zumindest zwei Sendermodule (1) Lasersignale unterschiedlicher Wellenlänge aussenden und/oder dass zumindest ein Sendermodul (1) ein gepulstes Fernlicht aussendet.

8. Kraftfahrzeug nach zumindest einem der vorhergehenden Ansprüche,
**dadurch gekennzeichnet, dass** das LIDAR System zumindest zwei Empfängermodule (2) umfasst, wobei alle Empfängermodule (2) als voneinander getrennte, separate Baueinheiten ausgebildet sind, wobei die Empfängermodule (2) über Datenleitungen mit der Steuereinheit (4) des LIDAR Systems verbunden sind, wobei die Steuereinheit (4) dazu eingerichtet ist, wahlweise ein bestimmtes der Empfängermodule (2) einzusetzen oder auszuwerten.

9. Kraftfahrzeug nach Anspruch 8,
**dadurch gekennzeichnet, dass** die zumindest zwei Empfängermodule (2) zumindest ein Fernfeld-Empfängermodul (2.1) und zumindest ein Nahfeld-Empfängermodul (2.2) umfassen, wobei die Steuereinheit (4) dazu eingerichtet ist, wahlweise das Fernfeld-Empfängermodul (2.1) oder das Nahfeld-Empfängermodul (2.2) einzusetzen oder auszuwerten.

10. Kraftfahrzeug nach zumindest einem der vorhergehenden Ansprüche,
**dadurch gekennzeichnet, dass** das Kraftfahrzeug, insbesondere die Steuereinheit (4), dazu eingerichtet ist, ein aktuelles Fahrszenario (4.3) zu detektieren, insbesondere Stadtfahrt (4.4) und/oder Autobahnfahrt (4.5) und/oder Parkbereich (4.6) und/oder Staubetrieb, und dass die Steuereinheit (4) dazu eingerichtet ist, abhängig von dem detektierten aktuellen Fahrszenario (4.3) ein bestimmtes Sendermodul (1) oder eine bestimmte Art von Sendermodul (1) einzusetzen, insbesondere ein Fernlicht-Sendermodul (1.1) oder ein Abblendlicht-Sendermodul (1.2) oder ein Laser-Sendermodul (1.3), und/oder abhängig von dem detektierten aktuellen Fahrszenario (4.3) ein bestimmtes Empfängermodul (2) oder eine bestimmte Art von Empfängermodul (2.1, 2.2) einzusetzen oder auszuwerten, insbesondere ein Fernfeld-Empfängermodul (2.1) oder ein Nahfeld-Empfängermodul (2.2).

11. Kraftfahrzeug nach zumindest einem der vorhergehenden Ansprüche,
**dadurch gekennzeichnet, dass** zumindest ein Empfängermodul (2) eine optische Linse (5) verwendet, die zumindest zwei verschiedene optische Zonen (6) mit unterschiedlicher Brennweite aufweist, wobei abhängig von einem detektierten aktuellen Fahrszenario das Empfängermodul (2) eine bestimmte optische Zone (6) der optischen Linse (5) verwendet.

12. Kraftfahrzeug nach zumindest einem der vorhergehenden Ansprüche,
**dadurch gekennzeichnet, dass** zumindest ein Sendermodul (1), bevorzugt einige oder alle Sendermodule (1), und/oder zumindest ein Empfängermodul (2), bevorzugt einige oder alle Empfängermodule (2), in Scheinwerfern (3) des Kraftfahrzeuges angeordnet sind.
